Europäisches Patentamt

European Patent Office

Office européen des brevets

(19)

(11) Numéro de publication : **0 174 695 B1**

(12) **FASCICULE DE BREVET EUROPÉEN**

(45) Date de publication du fascicule du brevet :
**30.11.88**

(21) Numéro de dépôt : **85201410.9**

(22) Date de dépôt : **06.09.85**

(51) Int. Cl.⁴ : **A 61 C   1/14**

(54) **Tête de contre-angle d'une pièce à main dentaire.**

(30) Priorité : **14.09.84 FR 8414730**

(43) Date de publication de la demande :
**19.03.86 Bulletin 86/12**

(45) Mention de la délivrance du brevet :
**30.11.88 Bulletin 88/48**

(84) Etats contractants désignés :
**AT CH DE IT LI SE**

(56) Documents cités :
**FR-A-   768 811**
**FR-A- 1 072 069**
**GB-A-   437 388**

(73) Titulaire : **MICRO-MEGA S.A.**
**5-12, rue du Tunnel**
**F-25006 Besancon (FR)**

(72) Inventeur : **Seigneurin, Michel**
**Saint-Cergues**
**F-74140 Douvaine (FR)**

(74) Mandataire : **Jörchel, Dietrich R.A. et al**
**c/o BUGNION S.A. Case postale 375**
**CH-1211 Genève 12 - Champel (CH)**

Jouve, 18, rue St-Denis, 75001 Paris, France

**Description**

L'invention concerne une tête de contre-angle d'une pièce à main dentaire selon le préambule de la revendication 1.

Habituellement, comme par exemple décrit dans les brevets FR-A 1 022 250 et FR-A 1 455 922, la tête de contre-angle d'une pièce à main comporte une barrette pivotante ou coulissante qui s'engage dans la gorge de la queue de la fraise, ce qui verrouille son déplacement longitudinal sans empêcher la rotation qui est commandée par le méplat engagé dans le vide correspondant du pignon de tête. Les tolérances prévues pour la largeur de la gorge de la queue de la fraise comme pour l'épaisseur de la barrette qui s'y engage font que, dans certains cas, le jeu longitudinal de la fraise est assez gênant car il provoque des vibrations longitudinales lorsque la fraise rencontre un corps dur tel que l'émail de la dent.

On connaît déjà également une tête de contre-angle telle que définie dans le préambule de la revendication 1 du FR-A 768 811. Dans ce contre-angle, le ressort, qui agit sur la glissière et la maintient en position de verrouillage, est un ressort boudin, logé dans un espace annulaire entre la périphérie externe du pignon creux et la périphérie interne d'une partie de ladite glissière qui coiffe le pignon sur une partie de sa longueur, en dessous des organes de serrage constitués par des billes. Pour cette raison, le ressort et la glissière entourent le pignon et augmentent ainsi le diamètre des parties tournantes, ce qui augmente l'inertie de ces parties. En outre, la glissière émerge librement de la tête, ce qui peut présenter des inconvénients pour le dentiste, étant donné que cette glissière tourne avec le pignon et l'instrument.

Une tête de contre-angle similaire est connue du FR-A 1 072 069. Dans ce contre-angle, la glissière entoure le pignon sur presque toute sa longueur, à l'exception des dentures, et est de son côté entourée par le ressort, ce qui augmente aussi l'inertie des parties tournantes. Dans la tête est prévu un poussoir en forme de capuchon solidaire de doigts à son extrémité interne qui passent à travers des ouvertures de la tête pour repousser la glissière et de cette manière libérer l'instrument. Ce poussoir en forme de capuchon se trouve au-dessus de la glissière et les doigts s'appuient sur le bord supérieur annulaire de la glissière.

Les têtes de contre-angle connues selon les deux brevets cités FR-A 768 811 et FR-A 1 072 069, décrivent des constructions tendant à améliorer la tenue des queues de fraise, toutefois, ces deux solutions ne résolvent pas d'une façon satisfaisante le problème des jeux longitudinaux.

Le but de l'invention consiste précisément à supprimer cet inconvénient par un rattrapage de jeu constamment en action tout en conservant la fixation quasi instantanée d'un instrument, en particulier d'une fraise.

Ce but est résolu conformément aux caractéristiques données dans la revendication 1.

Un des avantages de ce dispositif réside dans le fait qu'une pression longitudinale est constamment exercée par les coins, de préférence semi-annulaires, sur la queue de l'instrument de manière à éliminer tout débattement. En outre, grâce à cette disposition, tous les éléments de verrouillage sont disposés dans la partie supérieure de la tête, au-dessus du pignon d'entraînement, libérant ainsi celui-ci et l'espace qui l'entoure, et supprimant toute gêne pour l'entraînement dudit pignon.

Des formes d'exécution préférées de l'invention sont décrites dans les autres revendications.

D'autres avantages ressortiront de la description, faite à titre d'exemple non limitatif, d'une forme d'exécution préférentielle du dispositif selon l'invention et du dessin dans lequel :
- la figure 1 est une vue en coupe du dispositif déverrouillé.
- la figure 2 est une vue en coupe du dispositif verrouillé.
- la figure 3 est une vue longitudinale en coupe du pignon d'entraînement.
- la figure 3a est une coupe selon III-III de la figure 3.
- la figure 4 est une vue de dessous de la glissière, dans le sens de la flèche IV de la figure 5.
- la figure 5 est une vue en coupe axiale de la glissière.
- la figure 6 montre une vue en perspective d'un coin.
- la figure 7 montre une vue de dessus du pignon creux.
- la figure 8 montre une vue latérale de l'extrémité supérieure du pignon.

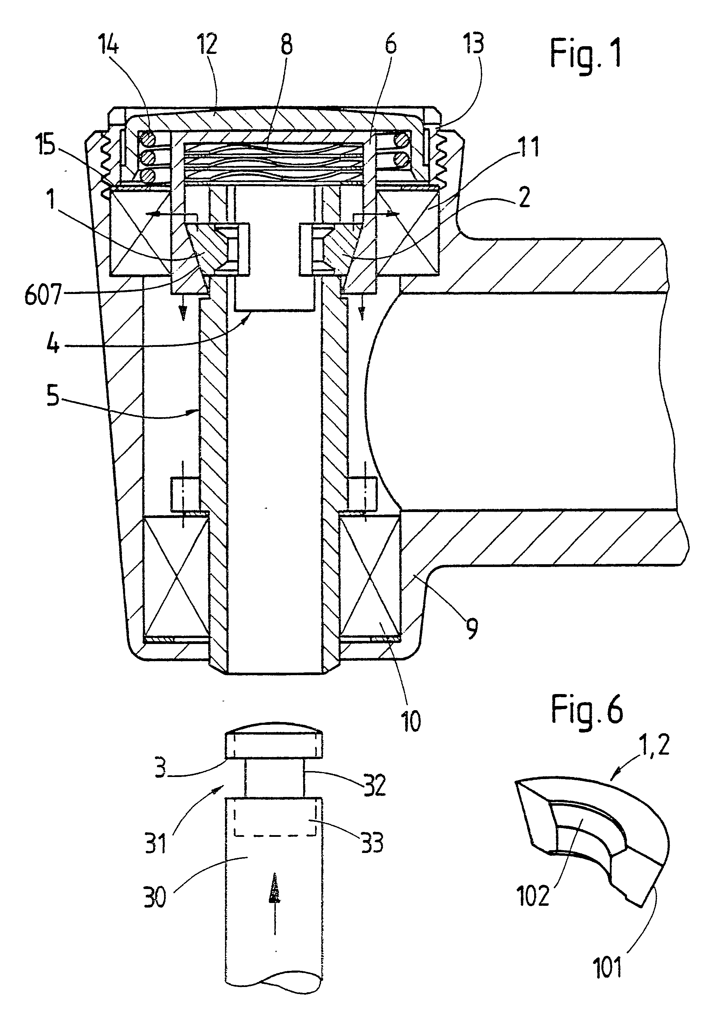

La figure 1 représente une coupe d'une tête de contre-angle 9 d'une pièce à main avant la mise en place d'une fraise ou d'un instrument 30, qui correspond aux normes internationales. Cet instrument 30 comporte une queue 31 conçue pour sa fixation dans la tête 9. Cette queue 31 est munie d'une gorge 32 annulaire et d'un méplat 33 dont la hauteur dépasse la largeur de la gorge 32.

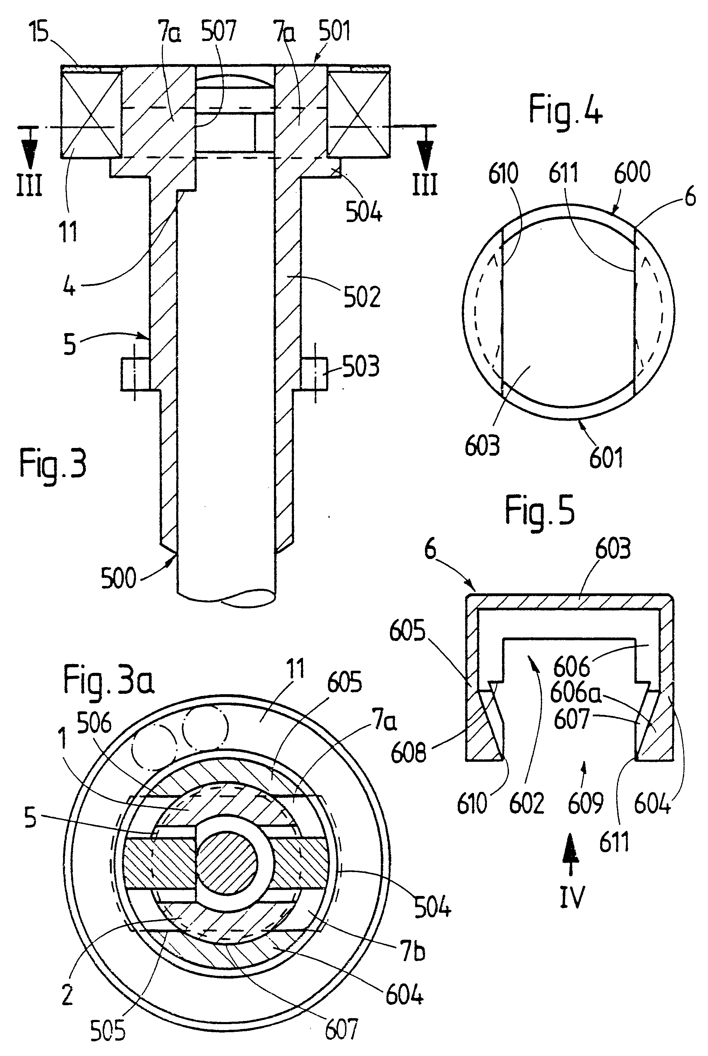

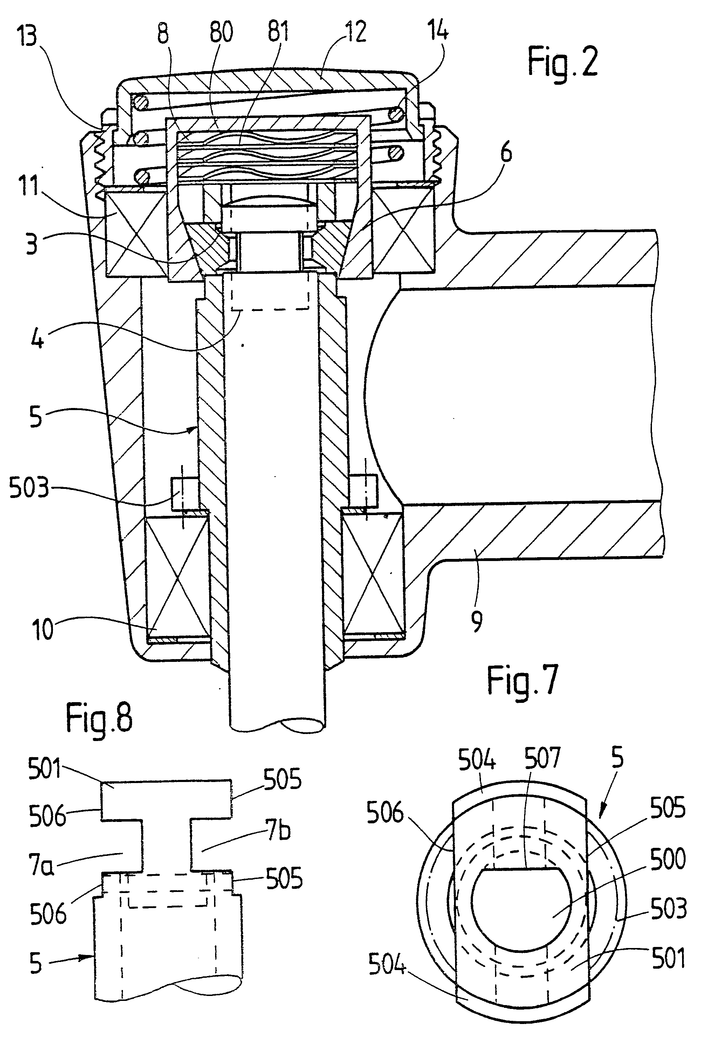

Un pignon 5 creux (fig. 3, 7 et 8), muni d'une couronne dentée 503, reçoit l'instrument 30 dans son alésage 500 jusqu'à un épaulement constituant une butée 4 que comporte cet alésage, laquelle fait coïncider le méplat 33 de l'instrument 30 avec un méplat interne 507 rainuré de l'extrémité supérieure 501 du pignon creux 5. Comme le montre la figure 3, l'alésage 500 de ce pignon 5 comporte deux parties séparées par un épaulement, constituant la butée 4 de profondeur pour le méplat de la queue 31 de l'instrument. L'extrémité supérieure 501 du pignon creux dans laquelle se loge cette queue 31 de l'instrument est constituée par une partie cylindrique, concentrique au fût 502 du pignon qui la sépare de la couronne dentée 503 ; le diamètre extérieur de cette partie cylindrique est supérieur au diamètre extérieur du fût. Cette partie supérieure 501 du pignon creux est taillée de façon que soient enlevés deux segments cylindriques équivalents afin d'obtenir deux méplats 505, 506 parallèles (fig. 7 et 8). Chacun de ces méplats 505, 506 est traversé par une rainure 7a, 7b perpendiculaire à l'axe de symétrie longitudinal du pignon 5 et parallèle aux méplats. La partie limitrophe entre le fût 502 et l'extrémité supérieure 501 constitue une embase 504 pour un palier 11.

Le pignon 5 tourne dans le corps de la tête 9 porté par deux paliers lisses ou deux roulements à billes 10 et 11 et est entraîné par l'arbre d'entraînement (non représenté) de la pièce à main au moyen d'une roue dentée fixée à l'extrémité antérieure de cet arbre et s'engageant dans la couronne dentée 503.

Une glissière 6 cylindrique creuse (fig. 4 et 5) coiffe l'extrémité supérieure 501 du pignon 5 et tourne avec elle dans le palier 11. Cette glissière 6 est fermée à l'une de ses extrémités par un fond 603, l'autre extrémité 609, à l'opposé de son fond 603, étant ouverte.

Cette glissière 6 porte dans son alésage 602 deux coins semi-circulaires 1 et 2 (fig. 6) diamétralement opposés, le coin 1 se trouve dans la rainure 7a, l'autre coin 2 dans la rainure 7b du pignon 5 (fig. 3a). Chaque coin 1, 2 comporte une face périphérique externe conique 101 (fig. 6), prenant appui du côté opposé à la queue de l'instrument 30 contre une face interne conique 607 de cette glissière 6 (fig. 6) constituant une rampe dont la pente est orientée vers le fond 603 de la glissière. La partie de ces coins 1, 2, orientée vers la queue de la fraise 30 est biseautée et comporte une face périphérique interne conique 102 (fig. 6) qui s'appuie sur le rebord supérieur 3 de la gorge 32, opposé à la partie travaillante de l'instrument 30.

La paroi de la glissière 6 cylindrique creuse comporte deux échancrures 600, 601 symétriques, diamétralement opposées (fig. 4) qui séparent cette partie de la paroi en deux zones identiques 604, 605 (fig. 5) comportant dans l'alésage 602, et à partir du fond 603, une partie cylindrique 606 et à partir d'un épaulement annulaire 608 une partie tronconique 606a formant ladite face interne conique 607.

Cette partie tronconique 606a est coupée par deux plans 610 et 611 parallèles à l'axe longitudinal de la glissière 6, coïncidant avec les deux échancrures 600, 601 et définissant la largeur de l'ouverture 609, cette largeur étant égale à l'écartement des méplats 505, 506 de l'extrémité supérieure 501 du pignon 5, de façon que les coins 1, 2 introduits dans les rainures 7a, 7b et prenant appui contre la face conique 607, ne puissent sortir de la glissière 6, les plans 610, 611 s'appliquant exactement contre les méplats 505, 506 de l'extrémité supérieure 501 du pignon 5.

Un ressort 8 circulaire logé dans la glissière 6 prend appui d'un côté sur le fond 603 de celle-ci, de l'autre côté sur l'extrémité supérieure 501 du pignon 5 sur laquelle il exerce une pression axiale permanente, y compris pendant la rotation du pignon 5. Le ressort 8 est constitué par des couches alternées de rondelles plates 81 et de rondelles ondulées 80 avec trois points de contact sur leur circonférence. Cette pression du ressort 8 s'exerce également sur le rebord 3 de la gorge 32 de l'instrument 30 parce que les coins 1, 2 sont tirés vers le haut par la face interne conique 607 de la glissière 6 alors que l'instrument est retenu par la butée 4 de l'alésage du pignon 5. De ce fait, l'instrument ne peut avoir de jeu longitudinal (fig. 2).

Le déplacement longitudinal de la glissière 6 qui permet l'écartement des coins 1, 2 pour l'introduction de la queue de l'instrument dans la tête 9 de la pièce à main est commandé par un bouton-poussoir 12 coiffant ladite glissière 6. Ce bouton 12 est maintenu en place sur la tête 9 par une couronne 13 vissée dans le corps de la tête. Un ressort à boudin 14 prend appui, d'un côté sur la partie intérieure du fond du bouchon 12, de l'autre côté sur une rondelle 15 portant sur le palier 11.

Pour faire sortir l'instrument 30, on presse sur le bouton 12. Sur la figure 1, le bouton 12 est représenté dans cette position d'appui sur la glissière 6. Dans cette position, la face interne conique 607 de la glissière libère les coins 1, 2 qui ne sont plus sollicités et peuvent céder latéralement, le rebord 3 de la gorge 32 les pousse radialement laissant le passage pour la queue de l'instrument 30 qui peut ainsi librement sortir.

La course latérale des coins 1 et 2 n'a besoin que de quelques dixièmes de millimètres pour solidariser la fraise au pignon 5. De même, la course de la glissière 6 est également faible pour faire jouer les coins.

Après avoir inséré un autre instrument, on relâche le bouton 12. Sur la figure 2, la pression exercée sur le bouton 12 a cessé; il se déplace vers l'extérieur de la tête 9 sous l'action du ressort 14 dans sa position de travail. La glissière 6 peut alors remonter dans le même sens sous l'action du ressort 8 ; les coins 1, 2, entraînés par la face interne conique 607 pénètrent dans la gorge 32 de la queue de l'instrument en exerçant une pression contre le rebord 3 de cette gorge 32, ce qui a pour effet d'appuyer fortement le bord du méplat 33 contre la butée 4 dans l'alésage 500 du pignon 5. Lorsque le pignon 5 entraîne l'instrument en rotation, l'action du ressort 8 s'exerce constamment et empêche l'instrument de prendre un jeu longitudinal, la glissière 6, le ressort 8 et les coins 1, 2 tournant avec le pignon 5 dans le palier 11. En position de travail (fig. 2), le bouton 12 tiré à l'extérieur par le ressort 14, ne touche pas la glissière 6.

D'autres formes d'exécution de l'invention peuvent être envisagées sans s'écarter des caractéristiques techniques revendiquées.

## Revendications

1. Tête de contre-angle (9) d'une pièce à main dentaire comprenant un pignon (5) creux monté rotativement dans le corps de la tête et disposé pour recevoir un instrument dentaire (30), en particulier une fraise, dont la queue (31) est munie d'une gorge annulaire (32) et d'un méplat (33) qui coopère avec un méplat (507) complémentaire dans la partie creuse d'une extrémité, dite supérieure, (501) du pignon (5) pour être rendu solidaire en rotation avec ce pignon (5), des moyens de verrouillage du déplacement longitudinal de l'instrument (30) comprenant une glissière (6) creuse montée dans le corps de la tête (9), mobile selon l'axe longitudinal de celle-ci, tournant avec le pignon (5) et coiffant l'extrémité supérieure (501) de celui-ci, ladite glissière (6) étant fermée, sur le côté extérieur, par un fond (603), suivi d'une partie cylindrique (606) dont la paroi sur le côté interne de son extrémité libre comporte une partie conique (607), des organes de serrage (1, 2) logés dans cette glissière (6) s'engageant contre ladite partie conique (607) de ladite glissière (6) et, dans la position de travail de l'instrument, dans ladite gorge annulaire (32) de celui-ci, et un ressort (8) tirant ladite glissière (6) axialement vers l'extérieur de la tête (9) de façon que l'instrument (30) soit poussé dans l'intérieur du pignon (5) creux contre une butée interne (4) de celui-ci sous l'effet de la pression exercée par les organes de serrage (1, 2), caractérisée par le fait que les organes de serrage sont au moins deux coins (1, 2) pourvus de faces externes (101) et internes (102) coniques, que ladite partie conique (607) est formée par une partie tronconique (606a), que ledit ressort (8) est logé dans ladite partie cylindrique (606) de la glissière (6) et prend appui d'un côté contre son fond (603) et de l'autre côté sur l'extrémité supérieure (501) du pignon (5) et qu'un bouton-poussoir (12) est monté coulissant dans ladite tête (9) et coiffe la glissière (6), ce bouton-poussoir (12) permettant de commander le déplacement longitudinal de la glissière pour annuler temporairement la pression exercée de façon permanente sur la glissière (6) par le ressort (8).

2. Tête de contre-angle selon la revendication 1, caractérisée par le fait que la paroi de la glissière (6) comporte deux échancrures (600, 601) symétriques diamétralement opposées, qui séparent cette paroi en deux zones (604, 605) identiques, et que ladite partie tronconique (606a) est coupée par deux plans (610, 611) parallèles à l'axe longitudinal de la glissière (6) et définissant la largeur de son ouverture (609) du côté opposé au fond (603).

3. Tête selon l'une des revendications 1 et 2, caractérisée par le fait que ledit ressort (8) est constitué de rondelles déformées (80) en trois points alternant avec des rondelles plates (81).

4. Tête selon l'une des revendications 1 à 3, caractérisée par le fait que le pignon (5) comporte un alésage (500) en deux parties séparées par un épaulement constituant ladite butée (4) de profondeur pour le méplat de la queue de l'instrument (30), par le fait que son extrémité supérieure (501) dans laquelle se loge la queue (31) de l'instrument (30) est constituée par une partie cylindrique, concentrique au fût (502) du pignon qui la sépare d'une couronne dentée (503), son diamètre étant supérieur à celui du fût, que cette extrémité supérieure (501) est taillée son extérieur de façon que soient enlevés deux segments cylindriques équivalents afin d'obtenir deux méplats (505, 506) parallèles dont l'écartement correspond à la largeur de l'ouverture (609) de la glissière (6), la partie du fût limitrophe de l'extrémité supérieure (501) du pignon formant une embase (504) pour un palier (11), et par le fait que chacun de ces méplats est traversé par une rainure (7a, 7b) perpendiculaire à l'axe de symétrie longitudinal du pignon (5) et parallèle aux méplats (505, 506), ces deux rainures (7a, 7b) servant de logement partiel aux coins (1, 2).

5. Tête selon l'une des revendications 1 à 4, caractérisée par le fait que ledit bouton-poussoir (12) est coulissant dans une couronne (13) vissée dans le corps de la tête (9), cette couronne (13) limitant la course du bouton-poussoir (12) due à l'action d'un ressort (14), qui la sépare de la glissière (6).

### Claims

1. Dental handpiece contra-angle head (9) comprising a hollow pinion (5) rotatably mounted in the head casing and adapted to have a dental instrument (30), notably a bur, fitted therein, said instrument having a shank (31) provided with an annular groove (32) and a flattening (33) adapted to cooperate with a complementary flattening (507) formed in the hollow portion of one end, called upper end (501) of said pinion (5) so as to be rotatably coupled to said pinion (5), means for locking the axial displacement of the instrument (30) comprising a hollow guide member (6) mounted in said head casing, movable along the axis of the casing of said head (9) and rotatably coupled to said pinion (5), said hollow guide member overlapping the upper end (501) of said pinion (5) and being closed at the outer side by a bottom wall (603) followed by cylindrical portion (606) whose wall on the inner side of its free end has a conical portion (607), clamping members (1, 2) housed in said guide member (6), engaging said conical portion (607) of said guide member (6) and, in the operative position of the instrument, said annular groove (32) of said instrument, and a spring (8) urging said guide member (6) axially outwards in said head (9) so as to cause said instrument (30) to be urged inwards in said hollow pinion (5) against an inner abutment (4) of said pinion as a consequence of the pressure exerted thereon by said clamping members (1, 2), characterized by the fact that said clamping members are at least two wedge members (1, 2) provided with outer (101) and inner tapered surfaces (102), that said conical portion (607) is formed by a frustoconical portion (606a), that said spring (8) is housed in said cylindrical portion (606) of the guide member (6), and bears with one side against said bottom wall (603) and with the opposite side against the upper end (501) of said pinion (5), and that a push-button (12) is mounted slidably in said head (9) and covers the guide member (6), said push-button (12) being actuatable for controlling the longitudinal movement of said guide member when it is desired to momentarily relieve the permanent pressure exerted by said spring (8) on said guide member (6).

2. A contra-angle head according to claim 1, characterized by the fact that two symmetrical, diametrally opposed notches (600, 601), are formed in the wall of said guide member (6) for separating said wall into two identical areas (604, 605) and that said frustoconical portion (606a) is intersected by two flat faces (610, 611) parallel to the longitudinal axis of said guide member (6) and determining the width of the aperture (609) formed in said guide member opposite said bottom wall (603).

3. A contra-angle head according to claim 1 or 2, characterized by the fact that said spring (8) comprises a plurality of washers (80) provided with corrugations at three circumferentially spaced points and alternating with plain washers (81).

4. A contra-angle head according to one of claims 1 to 3, characterized by the fact that said pinion (5) comprises a bore (500) divided into two sections by a shoulder constituting said abutment (4) determining the depth of said flattening of the shank of the instrument (30), that its upper end (501) engaged by the shank (31) of the instrument (30) is formed by a cylindrical portion concentric to the arbor (502) of said pinion which separates said cylindrical portion from a toothed ring (503), its diameter being greater than that of said arbor, that said upper end (501) being machined externally to remove two equivalent cylindrical segments therefrom and form two parallel flat faces (505, 506) of which the spacing corresponds to the width of the aperture (609) of said guide member (6), the arbor section adjacent said upper end of the guide member constituting a base (504) for a bearing (11), and that each one of said flat faces has formed therethrough a groove (7a, 7b) extending at right angles to the longitudinal axis of symmetry of said pinion (5) and parallel to said flat faces (505, 506), said two grooves (7a, 7b) being adapted to receive one portion of said wedge members (1, 2).

5. A contra-angle head according to one of claims 1 to 4, characterized by the fact that said push-button (12) is adapted to slide in a crown (13) screwed in the casing of said head (9), said crown (13) limiting the stroke of said push-button (12) which is caused by a return spring (14) separating said crown from said guide member (6).

**Patentansprüche**

1. Winkelstückkopf (9) eines zahnärztlichen Handstücks mit einem hohlen Trieb (5), der drehbar im Körper des Kopfes montiert und zur Aufnahme eines zahnärztlichen Instruments (30), insbesondere eines Bohrers, bestimmt ist, dessen Einsteckende (31) eine ringförmige Nut (32) und eine Abflachung (33) aufweist, die zwecks drehfester Verbindung mit dem Trieb (5) mit einer komplementären Abflachung (507) im hohlen Teil eines, oberes Ende (501) genannten Endes dieses Triebs (5) zusammenwirkt, mit eine Längsverschiebung des Instruments (30) verhindernden Verriegelungsmitteln, die ein im Körper des Kopfes (9) montiertes hohles Gleitstück (6) aufweisen, das in Richtung der Längsachse des Kopfes beweglich ist, sich mit dem Trieb (5) dreht und dessen oberes Ende (501) überdeckt, wobei das erwähnte Gleitstück (6) auf der äusseren Seite durch einen Boden (603) verschlossen ist, gefolgt von einem zylindrischen Teil (606), dessen Wand auf der Innenseite seines freien Endes einen konischen Teil (607) aufweist, mit Spannorganen (1, 2), die in diesem Gleitstück (6) angeordnet sind und an dem erwähnten konischen Teil (607) dieses Gleitstücks (6) anliegen und, in der Arbeitsstellung des Instruments, in die erwähnte ringförmige Nut (32) desselben eingreifen, und mit einer Feder (8), welche das erwähnte Gleitstück (6) axial in Richtung auf die Aussenseite des Kopfs (9) zieht, derart, dass das Instrument (30) unter der Wirkung des von den Spannorganen (1, 2) ausgeübten Drucks ins Innere des hohlen Triebs (5) gegen einen inneren Anschlag (4) desselben gestossen wird, dadurch gekennzeichnet, dass die Spannorgane aus wenigstens zwei, mit konischen äusseren (101) und inneren Flächen (102) versehenen Keilen (1, 2) bestehen, dass der erwähnte konische Teil (607) durch einen kegelstumpfförmigen Teil (606a) gebildet ist, dass die erwähnte Feder (8) in dem erwähnten zylindrischen Teil (606) des Gleitstücks (6) untergebracht ist und sich auf einer Seite gegen den Boden (603) und auf der anderen Seite auf dem oberen Ende (501) des Triebs (5) abstützt und dass ein Druckknopf (12) verschiebbar in dem erwähnten Kopf (9) montiert ist und das Gleitstück (6) überdeckt, wobei dieser Druckknopf (12) die Längsverschiebung des Gleitstücks zu steuern erlaubt, um vorübergehend den permanent von der Feder (8) auf das Gleitstück (6) ausgeübten Druck unwirksam zu machen.

2. Winkelstückkopf nach Anspruch 1, dadurch gekennzeichnet, dass die Wand des Gleitstücks (6) zwei symmetrisch diametral gegenüberliegende bogenförmige Ausschnitte (600, 601) aufweist, welche diese Wand in zwei gleiche Zonen (604, 605) unterteilen, und dass der erwähnte kegelstumpfförmige Teil (606a) durch zwei Ebenen (610, 611) abgeschnitten ist, welche parallel zur Längsachse des Gleitstücks (6) liegen und die Breite seiner Oeffnung (609) an der dem Boden (603) gegenüberliegenden Seite definieren.

3. Winkelstückkopf nach einem der Ansprüche 1 und 2, dadurch gekennzeichnet, dass die erwähnte Feder (8) aus an drei Punkten verformten Federscheiben (80), welche mit ebenen Federscheiben (81) abwechseln, besteht.

4. Winkelstückkopf nach einem der Ansprüche 1 bis 3, dadurch gekennzeichnet, dass der Trieb (5) eine Bohrung (500) aufweist, welche durch eine Schulter in zwei Abschnitte getrennt ist, wobei diese Schulter den erwähnten Anschlag (4) bildet, der die Einstecktiefe für die Abflachung des Einsteckendes des Instruments (30) bestimmt, dass das obere Triebende (501), in welches das Einsteckende (31) des Instruments (30) eingreift, durch einen zylindrischen, konzentrisch zum Schaft (502) des Triebs angeordneten Teil gebildet ist, welcher ihn von einem Zahnkranz (503) trennt, wobei der Durchmesser des zylindrischen Teils grösser als der des Schaftes ist, dass dieses obere Ende (501) aussen derart geschnitten ist, dass zwei zylindrische äquivalente Segmente zur Erzeugung zweier paralleler Abflachungen (505, 506) entfernt sind, deren Abstand der Breite der Oeffnung (609) des Gleitstück (6) entspricht, dass der an das obere Ende (501) des Triebs angrenzende Teil des Schafts einen Ansatz (504) für ein Lager (11) bildet und dass jede der Abflachungen von einer Nut (7a, 7b) durchsetzt wird, die senkrecht zur Längssymmetrieachse des Triebs (5) und parallel zu den Abflachungen (505, 506) verläuft, wobei diese beiden Nuten (7a, 7b) zur teilweisen Aufnahme der Keile (1, 2) dienen.

5. Winkelstückkopf nach einem der Ansprüche 1 bis 4, dadurch gekennzeichnet, dass der erwähnte Druckknopf (12) verschiebbar in einer Krone (13) angeordnet ist, welche in den Körper des Kopfs (9) eingeschraubt ist und welche den von der Wirkung einer Feder (14) herrührenden Verschiebungsweg des Druckknopfes (12) begrenzt, wobei diese Feder den Druckknopf vom Gleitstück (6) trennt.

Fig. 1

Fig. 6

0 174 695

Fig.3

Fig. 3a

Fig.4

Fig.5

Fig.2

Fig.7

Fig.8